# EUROPÄISCHE PATENTSCHRIFT

(11) **EP 1 802 422 B1**
(45) Veröffentlichungstag und Bekanntmachung des Hinweises auf die Patenterteilung: **23.04.2008**
(21) Anmeldenummer: 05799656.3
(22) Anmeldetag: 07.10.2005
(51) Int. Cl.: B23Q 17/22, B23Q 17/24

(54) **VORRICHTUNG UND VERFAHREN ZUR DARSTELLUNG DER WIRKRICHTUNG EINES ARBEITSMITTELS**
DEVICE AND METHOD FOR REPRESENTING THE DIRECTION OF ACTION OF A WORKING MEANS
DISPOSITIF ET PROCÉDÉ DE REPRÉSENTATION DE LA DIRECTION D'ACTION D'UN MOYEN DE TRAVAIL

(30) Priorität: 15.10.2004 DE 102004050428
(43) Veröffentlichungstag der Anmeldung: 04.07.2007
(73) Patentinhaber: MTU Aero Engines GmbH, 80995 München (DE)
(72) Erfinder: HESSERT, Roland, 85229 Markt Indersdorf (DE); SATZGER, Wilhelm, 80804 München (DE)
(86) Internationale Anmeldenummer: PCT/DE2005/001794
(87) Internationale Veröffentlichungsnummer: WO 2006/042505

(56) Entgegenhaltungen:
- US-A- 5 741 096
- US-A1- 2004 032 587

## Beschreibung

Die Erfindung betrifft eine Vorrichtung zur Darstellung der Wirkrichtung eines Arbeitsmittels, insbesondere eines Werkzeugs oder einer Strahlungsquelle bzw. eines Strahlungsempfängers bspw. von Röntgenstrahlen, mit einer ersten Lichtquelle zur Erzeugung eines ersten Strahls und ein entsprechendes Verfahren.

Bei der Entwicklung, Fertigung und Prüfung moderner Produkte werden hohe Anforderungen an die eingesetzten Technologien gestellt, um die gewünschte Herstellungsgenauigkeit erreichen zu können. Ein Beispiel für derartige Produkte mit höchsten Anforderungen an die Produktionsgenauigkeit sind bspw. Turbinentriebwerke. Insbesondere im Bereich der Fertigungs- und Prüftechnik kommt der Positionierbarkeit von Werkzeugen oder Messgeräten, bspw. Röntgendiffraktometern, relativ zu den Bauteilen eine entscheidende Bedeutung zu. Um eine hohe Produktqualität bei wirtschaftlichen Herstellungsverfahren zu erreichen, ist es wichtig, die Ausrichtung dieser Arbeitsmittel während des Betriebs kontinuierlich überprüfen zu können.

Derzeit sind keine Möglichkeiten bekannt, die eine Visualisierung der Wirkrichtungen von Werkzeugen oder nicht sichtbaren Strahlungen, bspw. Röntgenstrahlen eines Röntgendiffraktometers, während des Betriebs erlauben. Statt dessen wird eine Lichtquelle oder deren Lichtstrahl in die der Wirkrichtung entsprechende Raumrichtung des Arbeitsmittels eingeklappt oder eingespiegelt. Die dafür nötigen Vorrichtungen erfordern einen hohen Platzbedarf und sind konstruktiv aufwändig, da ein direkter Zugang zu der Raumrichtung notwendig ist, in der die Wirkrichtung des Arbeitsmittels verläuft. Derartige Konstruktionen beeinträchtigen oft das Leistungsspektrum des Arbeitsmittels bzw. der gesamten Anlage. Darüber hinaus ist eine Darstellung der Wirkrichtung des Arbeitsmittels im Normalfall nur möglich, wenn der Werkzeug- oder Strahlbetrieb des Arbeitsmittels unterbrochen wird.

Aufgabe der Erfindung ist es daher, eine kontinuierliche Vermessung und exakte Kontrolle der Wirkrichtung eines Arbeitsmittels, insbesondere eines Werkzeugs oder einer Strahlungsquelle, im Betrieb zu ermöglichen.

Diese Aufgabe wird bei der Vorrichtung der eingangs genannten Art mit den Merkmalen des Anspruchs 1 gelöst. Dabei ist zusätzlich zu der ersten Lichtquelle mindestens eine weitere Lichtquelle zur Erzeugung eines weiteren Strahls vorgesehen, wobei die Lichtquellen und/oder das Arbeitsmittel derart einrichtbar sind, dass der erste Strahl und der weitere Strahl eine flächige Aufweitung bzw. Ausdehnung aufweisen und sich in der Wirkrichtung des Arbeitsmittels schneiden. Die flächige Aufweitung der Strahlen erzeugt insbesondere Lichtebenen. Dadurch ist es möglich, die Lichtquellen zur Erzeugung dieser Lichtebenen außerhalb der zu visualisierenden Wirkrichtung des Arbeitsmittels anzubringen, wobei sich die beiden flächigen Strahlen in einer Schnittlinie bzw. Schnittgeraden schneiden. Erfindungsgemäß wird diese Schnittgerade mit der Wirkrichtung des Arbeitsmittels in Übereinstimmung gebracht, so dass die erkennbare Schnittgerade der flächigen Strahlen mit der darzustellenden Raumrichtung (Wirkrichtung des Arbeitsmittels) übereinstimmt.

Da die Lichtquellen erfindungsgemäß außerhalb des eigentlichen Arbeitsbereichs des Werkzeugs angeordnet sind, kann die mit der Wirkrichtung übereinstimmende Raumrichtung auch während des Betriebs des Arbeitsmittels sichtbar gemacht werden. Einen speziellen Anwendungsfall stellt die Verwendung der erfindungsgemäßen Vorrichtung für ein robotergeführtes Röntgendiffraktometer dar, um die Strahlrichtung bei eingeschalteter Röntgenstrahlung visualisieren zu können. Diese dargestellte Raum- bzw. Wirkrichtung wird dabei vorzugsweise auf die Oberfläche des zu bearbeitenden und/oder zu untersuchenden Bauteils gerichtet, so dass die Wirkrichtung auch bei einem relativ zu dem Arbeitsmittel bewegten Bauteil immer sichtbar ist.

Gemäß einer bevorzugten Ausführungsform der Erfindung kann eine oder jede Lichtquelle mit einer Justagevorrichtung an einer Visualisierungseinheit angeordnet sein, so dass jede Lichtquelle in jeder Raumrichtung robotergeführt oder manuell frei einstellbar ist.

Vorzugsweise ist auch das Arbeitsmittel an einer insbesondere an der Visualisierungseinheit angebrachten Einstellvorrichtung angeordnet, um die Lichtquellen und das Arbeitsmittel mit großen Freiheitsgraden relativ zueinander einstellen zu können.

Um eine einmal vorgenommene Einstellung von Arbeitsmittel und Lichtquellen zueinander zu erhalten, können das Arbeitsmittel mit der Einstellvorrichtung und die Visualisierungseinheit mit den Lichtquellen als Einheit bspw. relativ zu dem Bauteil verschiebbar sein. Dazu können das Arbeitsmittel oder die Visualisierungseinheit an entsprechenden Stellgliedern oder mehrachsigen Robotern geführt sein.

Eine einfache Möglichkeit zur Ausbildung planer oder gekrümmter Lichtebenen stellt eine als Laserliniengenerator ausgebildete Lichtquelle dar. In diesem Fall kann es vorteilhaft sein, rotierende transparente Scheiben oder Quader in den Strahlengang der flächigen Strahlen einzubringen, um durch den dadurch erzeugten wechselnden Parallaxenversatz die Speckle-Effekte der Laserliniengeneratoren drastisch zu reduzieren. Natürlich können die Strahlen erfindungsgemäß auch durch ein System optischer Elemente, bspw. mit entsprechenden Lichtblenden, erzeugt werden. Eine weitere Ausgestaltung der Lichtquelle bzw. des Laserliniengenerators sieht vor, einen Lichtstrahl, bspw. einen Laserstrahl, auf einen drehbar angeordneten Spiegel zu richten, wobei der Lichtstrahl insbesondere im Bereich einer Drehachse des Spiegels auf den Spiegel trifft. Wenn die Frequenz, mit der der Spiegel hin- und herdreht, hoch genug ist, erzeugt der reflektierte Lichtstrahl einen flächig aufgeweiteten Strahl.

Um die Darstellung der Raumrichtung zu verdeutlichen, können der erste Strahl und der weitere Strahl so eingestellt werden, dass sie ein insbesondere orthogonales Kreuz bspw. auf die Oberfläche des Bauteils projizieren, dessen Schnittpunkt der Wirk- bzw. Arbeitspunkt des Arbeitsmittels auf dem Bauteil ist. In diesem Fall kann die Wirkrichtung des Arbeitsmittels auch dadurch sichtbar gemacht werden, dass der Abstand zwischen dem Bauteil und dem Arbeitsmittel bspw. durch eine Verstellung des Bauteils oder Arbeitsmittels verändert wird. Natürlich können je nach den Gegebenheiten auch andere optische Muster erzeugt werden. Dazu können ggf. auch mehr als zwei Lichtquellen mit mehr als zwei flächigen Strahlen verwendet werden.

Einfacher Weise sind die erzeugten Strahlen sichtbare Lichtstrahlen, d.h. sie entstammen dem Wellenlängenbereich des sichtbaren Lichts. So kann die Visualisierung der Wirkrichtung ohne weitere Hilfsmittel durch optische Überwachungseinrichtungen wie Kameras oder das menschliche Auge erfolgen. Mittels geeigneter Sensoren lassen sich jedoch auch nicht aus dem sichtbaren Wellenlängenbereich des Lichtes stammende Strahlen darstellen, so dass auch diese erfindungsgemäß eingesetzt werden können.

Die Erfindung bezieht sich auch auf ein Verfahren zur Darstellung der Wirkrichtung eines Arbeitsmittels, bei dem ein Strahl zur Visualisierung der Wirkrichtung des Arbeitsmittels erzeugt wird. Dieses Verfahren kann insbesondere mit der vorbeschriebenen Vorrichtung durchgeführt werden. Dabei wird eine Schnittlinie aus einem ersten flächigen Strahl und mindestens einem weiteren flächigen Strahl gebildet, wobei der erste Strahl, der weitere Strahl und/oder das Arbeitsmittel derart ausgerichtet werden, dass die Schnittlinie der Strahlen in Wirkrichtung des Arbeitsmittels verläuft.

Vorzugsweise werden die Strahlen aus Licht mit sichtbaren Wellenlängen erzeugt, wobei der erste und der weitere Strahl auch aus verschiedenfarbigem Licht gebildet werden können, um bspw. gewisse Vorzugsrichtungen des Arbeitsmittels auf dem Bauteil darzustellen. Ferner können die Strahlen in der Projektion ein Muster ergeben, insbesondere ein Kreuz oder Fadenkreuz.

Weitere Merkmale, Vorteile und Anwendungsmöglichkeiten der Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der Erfindung, unabhängig von deren Zusammenfassung in den Ansprüchen oder deren Rückbezügen.

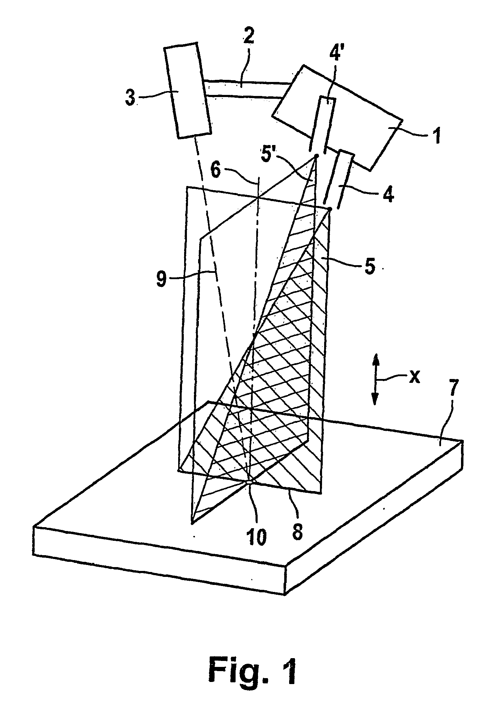

Die einzige Fig. 1 zeigt schematisch den Aufbau einer erfindungsgemäßen Vorrichtung zur Darstellung der Wirkrichtung 9 eines Arbeitsmittels 3 in einer dreidimensionalen Ansicht. Bei dem Arbeitsmittel 3 kann es sich um ein Werkzeug bspw. zur mechanischen Bearbeitung eines Bauteils 7 oder eine Strahlungsquelle bzw. einen Strahlungsempfänger von Röntgenstrahlen handeln, mit denen das Bauteil 7 untersucht werden soll. Insbesondere kann das Arbeitsmittel 3 ein robotergeführtes Röntgendiffraktometer sein, dessen Strahlrichtung als Wirkrichtung 9 zur Überwachung kontinuierlich dargestellt werden soll.

Dazu weist die Vorrichtung eine erste Lichtquelle 4 zur Erzeugung eines ersten Strahls 5 und eine zweite Lichtquelle 4' zur Erzeugung eines weiteren Strahls 5' auf. Beide Lichtquellen 4, 4' sind justierbar an einer gemeinsamen optischen Visualisierungseinheit 1 angebracht und erzeugen flächig aufgeweitete Strahlen 5, 5'. Die insbesondere als Laserliniengeneratoren ausgebildeten Lichtquellen 4, 4' sind durch die Justagemöglichkeiten an der Visualisierungseinheit 1 derart eingerichtet, dass sich die als Lichtebenen ausgebildeten, flächigen Strahlen 5, 5' in einer Schnittlinie bzw. Schnittgeraden 6 schneiden. Durch die Strahlen 5, 5' wird ein Kreuz 8 auf die Oberfläche des Bauteils 7 projiziert, dessen Schnittpunkt 10 in der Schnittgeraden 6 liegt. Die Schnittgerade 6 lässt sich bspw. durch Verschieben des Bauteils 7 in der durch den Pfeil x angedeuteten Bewegungsrichtung für verschiedene Abstände zwischen Bauteil 7 und Visualisierungseinheit 1 auf der Oberfläche des Bauteils 7 darstellen.

Zur Darstellung der Wirkrichtung 9 des Arbeitsmittels 3 muss nun die Schnittgerade 6 mit der Wirkrichtung 9 in Übereinstimmung gebracht werden. Dazu ist das Arbeitsmittel 3 über eine Einstellvorrichtung 2 mit der Visualisierungseinheit 1 verbunden. Mittels der Einstellvorrichtung 2 und der nicht näher dargestellten Justagemöglichkeiten für die Lichtquellen 4, 4' ist es möglich, die Wirkrichtung 9 und die Schnittgerade 6, welche in Fig. 1 noch als verschiedene Geraden dargestellt sind, übereinander zu legen. Dazu können die Lichtquellen 4, 4' und/oder das Arbeitsmittel 3 entsprechend eingestellt werden. Nach der Justage kann die Einheit aus der optischen Visualisierungseinheit 1 mit den eingestellten Lichtquellen 4, 4' und das Arbeitsmittel 3 als Einheit über nicht dargestellte Stellglieder oder Roboter relativ zu dem Bauteil 7 verschoben werden, ohne dass die Schnittgerade 6 und die Wirkrichtung 9 auseinander fallen.

Damit ist die Wirkrichtung 9 des Arbeitsmittels auch während dessen Betriebs auf der Bauteiloberfläche 7 stets sichtbar. Dies gilt auch dann, wenn sich die Stellung der Oberfläche des Bauteils 7 und des Arbeitsmittels 3 zueinander ändern.

Durch die vorliegende Erfindung ist es möglich, eine mit der Wirkrichtung 9 eines Arbeitsmittels 3 zusammenfallende Raumrichtung durch das Überschneiden zweier flächiger Lichtstrahlen 5, 5' bzw. Lichtebenen auch während des Betriebs des Arbeitsmittels 3 zu visualisieren, da die Lichtquellen 4, 4' für die Strahlen 5, 5' außerhalb der darzustellenden Raumrichtung angeordnet werden können und die Raumrichtung durch Überschneiden dieser flächigen Strahlen erzeugt wird.

## Patentansprüche

1. Vorrichtung zur Darstellung der Wirkrichtung (9) eines Arbeitsmittels (3), nämlich eines, insbesondere robotergeführten, Röntgendiffraktometers, mit einer ersten Lichtquelle (4) zur Erzeugung eines ersten Strahls (5), **dadurch gekennzeichnet, dass** mindestens eine weitere Lichtquelle (4') zur Erzeugung eines weiteren Strahls (5') vorgesehen ist, wobei die Lichtquellen (4, 4') und das Arbeitsmittel (3) derart einrichtbar sind, dass der erste Strahl (5) und der weitere Strahl (5') eine flächige Aufweitung aufweisen und sich in der Wirkrichtung (9) des Arbeitsmittels (3) schneiden, wobei eine Lichtquelle (4, 4') mit einer Justagevorrichtung an einer Visualisierungseinheit (1) angeordnet ist und wobei das Arbeitsmittel (3) an einer Einstellvorrichtung (2) angeordnet ist.

2. Vorrichtung nach Anspruch 1, **dadurch gekennzeichnet, dass** das Arbeitsmittel (3) mit der Einstellvorrichtung (2) und die Visualisierungseinheit (1) mit den Lichtquellen (4, 4') als Einheit verschiebbar sind.

3. Vorrichtung nach einem der vorhergehenden Ansprüche, **dadurch gekennzeichnet, dass** eine Lichtquelle (4, 4') als Laserliniengenerator ausgebildet ist.

4. Vorrichtung nach einem der vorhergehenden Ansprüche, **dadurch gekennzeichnet, dass** der erste Strahl (5) und der weitere Strahl (5') ein insbesondere orthogonales Kreuz (8) projizieren.

5. Vorrichtung nach einem der vorhergehenden Ansprüche, **dadurch gekennzeichnet, dass** die Strahlen (5, 5') sichtbare Lichtstrahlen sind.

6. Verfahren zur Darstellung der Wirkrichtung (9) eines Arbeitsmittels (3), nämlich eines, insbesondere robotergeführten, Röntgendiffraktometers, bei dem ein Strahl zur Visualisierung der Wirkrichtung (9) des Arbeitsmittels (3) erzeugt wird, mit einer Vorrichtung nach einem der Ansprüche 1 bis 5, **dadurch gekennzeichnet, dass** eine Schnittlinie (6) aus einem ersten flächigen Strahl (5) und mindestens einem weiteren flächigen Strahl (5') gebildet wird, wobei der erste Strahl (5), der weitere Strahl (5') und/oder das Arbeitsmittel (3) derart ausgerichtet werden, dass die Schnittlinie (6) in Wirkrichtung (9) des Arbeitsmittels (3) verläuft.

7. Verfahren nach Anspruch 6, **dadurch gekennzeichnet, dass** die Strahlen (5, 5') aus Licht mit sichtbaren Wellenlängen erzeugt werden.

8. Verfahren nach einem der Ansprüche 6 oder 7, **dadurch gekennzeichnet, dass** die Strahlen (5, 5') in der Projektion ein Muster ergeben, insbesondere ein Kreuz (8) oder Fadenkreuz.

## Claims

1. A device for representing the direction of action (9) of a working appliance (3), namely an X-ray diffractometer, in particular a robot-guided X-ray diffractometer, with a first light-source (4) for generating a first beam (5), **characterised in that** at least one further light-source (4') for generating a further beam (5') is provided, the light-sources (4, 4'} and the working appliance (3) being capable of being set up in such a manner that the first beam (5) and the further beam (5') exhibit a planar expansion and intersect in the direction of action (9) of the working appliance (3), a light-source (4, 4') with an adjustment device being arranged on a viewing unit (1), and the working appliance (3) being arranged on an adjusting device (2).

2. A device according to Claim 1, **characterised in that** the working appliance (3) with the adjusting device (2) and the viewing unit (1) with the light-sources (4, 4') are displaceable as a unit.

3. A device according to one of the preceding claims, **characterised in that** a light-source (4, 4') takes the form of a laser line generator.

4. A device according to one of the preceding claims, **characterised in that** the first beam (5) and the further beam (5') project a cross (8), in particular an orthogonal cross (8).

5. A device according to one of the preceding claims, **characterised in that** the beams (5, 5') are beams of visible light.

6. A method for representing the direction of action (9) of a working appliance (3), namely an X-ray diffractometer, in particular a robot-guided X-ray diffractometer, wherein a beam for visualising the direction of action (9) of the working appliance (3) is generated, with a device according to one of Claims 1 to 5, **characterised in that** a line of intersection (6) is formed from a first planar beam (5) and at least one further planar beam (5'), the first beam (5), the further beam (5') and/or the working appliance (3) being aligned in such a manner that the line of intersection (6) extends in the direction of action (9) of the working appliance (3).

7. A method according to Claim 6, **characterised in that** the beams (5, 5') are generated from light having visible wavelengths.

8. A method according to one of Claims 6 or 7, **characterised in that** in projection the beams (5, 5') yield a pattern, in particular a cross (8) or cross hairs.

## Revendications

1. Dispositif de représentation du sens d'action (9) d'un moyen de travail (3), à savoir un radiodiffractomètre, notamment guidé par robot, avec une première source de lumière (4) pour générer un premier rayon (5), **caractérisé en ce qu'**au moins une autre source de lumière (4') est prévue pour générer un autre rayon (5'), les sources de lumière (4, 4') et le moyen de travail (3) pouvant être installés de telle sorte que le premier rayon (5) et l'autre rayon (5') présentent une divergence plane et se coupent dans le sens d'action (9) du moyen de travail (3), une source de lumière (4, 4') étant disposée à l'aide d'un dispositif d'alignement sur une unité de visualisation (1) et le moyen de travail (3) étant disposé sur un dispositif de réglage (2).

2. Dispositif selon la revendication 1, **caractérisé en ce que** le moyen de travail (3) avec le dispositif de réglage (2) et l'unité de visualisation (1) avec les sources de lumière (4, 4') peuvent être déplacés comme une unité.

3. Dispositif selon l'une quelconque des revendications précédentes, **caractérisé en ce qu'**une source de lumière (4, 4') est réalisée comme un générateur de raies laser.

4. Dispositif selon l'une quelconque des revendications précédentes, **caractérisé en ce que** le premier rayon (5) et l'autre rayon (5') projettent une croix (8) particulièrement orthogonale.

5. Dispositif selon l'une quelconque des revendications précédentes, **caractérisé en ce que** les rayons (5, 5') sont des rayons lumineux visibles.

6. Procédé de représentation du sens d'action (9) d'un moyen de travail (3), à savoir d'un radiodiffractomètre, notamment guidé par robot, dans lequel un rayon est généré pour visualiser le sens d'action (9) du moyen de travail (3), avec un dispositif selon l'une quelconque des revendications 1 à 5, **caractérisé en ce qu'**une ligne de coupe (6) est formée par un premier rayon (5) plan et au moins un autre rayon (5') plan, le premier rayon (5), l'autre rayon (5') et/ou le moyen de travail (3) étant alignés de telle sorte que la ligne de coupe (6) s'étende dans le sens d'action (9) du moyen de travail (3).

7. Procédé selon la revendication 6, **caractérisé en ce que** les rayons (5, 5') sont générés à partir de lumière avec des longueurs d'onde visibles.

8. Procédé selon l'une quelconque des revendications 6 ou 7, **caractérisé en ce que** les rayons (5, 5') produisent en projection un modèle, notamment une croix (8) ou un réticule.
